# EUROPÄISCHE PATENTSCHRIFT

(11) **EP 2 483 027 B1**
(45) Veröffentlichungstag und Bekanntmachung des Hinweises auf die Patenterteilung: **02.04.2014**
(21) Anmeldenummer: 10752754.1
(22) Anmeldetag: 01.09.2010
(51) Int. Cl.: B23F 17/00, B23F 19/10

(54) **VERFAHREN ZUR HERSTELLUNG EINER INNENVERZAHNUNG**
METHOD FOR PRODUCING AN INTERNAL TOOTHING
PROCÉDÉ DE FABRICATION D'UNE DENTURE INTÉRIEURE

(30) Priorität: 30.09.2009 DE 102009045137
(43) Veröffentlichungstag der Anmeldung: 08.08.2012
(73) Patentinhaber: ZF Friedrichshafen AG, 88038 Friedrichshafen (DE)
(72) Erfinder: FÜHRER, Kim, 88131 Lindau (DE)
(86) Internationale Anmeldenummer: PCT/EP2010/062804
(87) Internationale Veröffentlichungsnummer: WO 2011/039025

(56) Entgegenhaltungen:
- EP-A2- 0 446 016
- DE-A1- 10 358 229
- JP-A- 2000 087 993

## Beschreibung

Die Erfindung betrifft ein Verfahren zur Herstellung einer Innenverzahnung mit Abweisflächen nach dem Oberbegriff des Patentanspruches 1.

Bauteile mit Innenverzahnung, beispielsweise einer Mitnahme- oder Keilwellenverzahnung werden mit anderen Bauteilen wie z. B. Wellen oder Zapfen, die eine entsprechende Außenverzahnung aufweisen, in axialer Richtung gefügt, um einen Formschluss zwischen den beiden Bauteilen herzustellen. Beim Fügen beider Bauteile kann es zu einer so genannten Zahn-auf-Zahn-Position kommen, d. h. ein Fügen in axialer Richtung wird blockiert. Beide Bauteile müssen dann so weit gegeneinander verdreht werden, bis die Zähne ihre Zahnlücken gefunden haben und die Blockade aufgehoben ist. Ein derartiges Verdrehen der Bauteile erschwert und verzögert eine zügige Montage. Darüber hinaus gibt es Fälle, in denen ein Verdrehen der Bauteile nicht ohne weiteres möglich ist.

Bekannt ist dieses Problem beispielsweise bei Synchronisiereinrichtungen in Zahnradgetrieben, bei welchen eine Schaltmuffe mit Innenverzahnung über einen Kupplungskörper mit Außenverzahnung geschoben wird. Um das Übereinanderschieben von Schaltmuffe und Kupplungskörper zu erleichtern, sind die Zähne stirnseitig mit Schräg- oder Abweisflächen versehen. Die Herstellung derartiger Abweisflächen an einer Innen- oder Außenverzahnung ist unproblematisch, wenn die Stirnflächen der Verzahnungen bündig mit den Stirnflächen der Bauteile angeordnet sind.

Durch die DE 37 21 949 A1 wurden Bauteile mit Innen- und Außenverzahnungen bekannt, welche stirnseitig angeschrägt sind. Die Stirnflächen der Verzahnungen weisen dabei eine dachartige Schneidenform mit von einer scheidenartigen Firstkante ausgehenden dachartigen Führungsflächen auf. Die Herstellung der dachartigen Schneidenform erfolgt durch stirnseitige Bearbeitung mit einem geradlinig oder auf einer gekrümmten Bahn geführten Formfräser, welcher spangebend in die Zahnlücken eingreift. Diese Herstellungsmethode versagt, wenn die Innenverzahnung gegenüber der Stirnseite des betreffenden Bauteils nach innen versetzt, also für einen derartigen Fräser nicht zugänglich ist.

Durch die EP 1 116 901 A2 wurde ein Planetengetriebe mit Zahnrädern bekannt, deren Stirnflächen zur Erleichterung der Montage angeschrägt sind. Die Herstellung der Schräg- oder Abweisflächen an der Verzahnung erfolgt durch Kaltschmieden, d. h. mittels einer hierfür herzustellenden Schmiedeform. Die Maßhaltigkeit und Oberflächengüte derartig hergestellter Zahnräder genügt höheren Anforderungen nicht.

Die JP 2000-087993 beschreibt ein Verfahren nach dem Oberbegriff des Anspruchs 1.

Es ist Aufgabe der vorliegenden Erfindung, ein Verfahren der eingangs genannten Art, also zur Herstellung einer "innen liegenden" Innenverzahnung vorzuschlagen, welches eine Erleichterung der Montage beim Fügen der Bauteile mit Innen- und Außenverzahnung erlaubt. Es ist auch Aufgabe der Erfindung, ein Bauteil der eingangs genannten Art mit Abweisflächen zu schaffen, welche ein einfaches Fügen von Bauteilen mit Innen- und Außenverzahnung erlauben.

Die Aufgabe der Erfindung wird durch die Merkmale des unabhängigen Anspruchs 1 gelöst. Vorteilhafte Ausgestaltungen ergeben sich aus den Unteransprüchen.

Erfindungsgemäß ist bei einem Verfahren zur Herstellung einer Innenverzahnung in einem Bauteil vorgesehen, dass die Stirnfläche der Innenverzahnung spangebend mit einem Kegelfräser bearbeitet wird, wobei die Rotationsachse des Kegelfräsers parallel zur Längsachse der Verzahnung angeordnet ist und der Kegelfräser auf einer Kreisbahn über einen bestimmten Umfangswinkel bis zum Erreichen einer ersten Umfangsposition geführt wird. Danach wird das Werkzeug in axialer Richtung zurückgestellt und hinterlässt eine bearbeitete Stirnfläche, welche dem Profil des kegelförmigen Fräskopfes entspricht. In einem anschließenden Verfahrensschritt wird der Kegelfräser nach axialem Zustellen auf einer Kreisbahn in entgegengesetzter Richtung an die erste Umfangsposition herangeführt, sodass sich eine Verschneidungskante zwischen der ersten Bearbeitungsfläche und der zweiten Bearbeitungsfläche ergibt. Diese Verschneidungskante ist mittig auf der Stirnseite eines Zahnes der Innenverzahnung angeordnet und bildet eine Abweiskante. Hierdurch ergibt sich eine dachartige Ausbildung der Stirnfläche eines Zahnes mit beiderseits von der Abweiskante abfallenden Abweisflächen. Das Verfahren kann mehrfach wiederholt werden, um mehrere Zähne auf dem Umfang der Innenverzahnung mit derartigen Abweisflächen und einer Abweiskante zu versehen. Bevorzugt werden mit dem erfindungsgemäßen Verfahren drei gleichmäßig über dem Umfang verteilte Zähne mit stirnseitigen Abweisflächen hergestellt. Mit dem erfindungsgemäßen Verfahren ist es möglich, Innenverzahnungen, deren Stirnflächen nach innen versetzt im Bauteil angeordnet sind, mit Abweisflächen zur Erleichterung und Beschleunigung der Montage beim Fügen herzustellen.

Nach einer bevorzugten Verfahrensvariante kann die Herstellung der Verzahnung entweder vor oder nach der erfindungsgemäßen Bearbeitung mit dem Kegelfräser erfolgen. Die Herstellung der Verzahnung kann dabei bevorzugt durch Räumen oder Stoßen erfolgen.

Bei einem Bauteil mit Innenverzahnung und zurückliegender Stirnfläche ist vorgesehen, dass mindestens ein Zahn der Innenverzahnung auf seiner Stirnfläche von einer Abweiskante ausgehende, in Umfangsrichtung abfallende Abweisflächen aufweist. Bevorzugt sind drei gleichmäßig auf dem Umfang verteilte Zähne mit Abweisflächen vorgesehen. Damit wird der Vorteil erreicht, dass die Montage beim Fügen mit einem eine entsprechende Außenverzahnung aufweisenden Bauteil erleichtert und beschleunigt wird. Ein gegenseitiges Verdrehen beider Bauteile bei einer Zahn-auf-Zahn-Position ist nicht mehr erforderlich. Durch die Abweisflächen gleitet das zu fügende Bauteil in Umfangsrichtung und findet seinen Weg in die Zahnlücken, sodass ein axiales Fügen möglich ist.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: eine Ansicht auf ein Bauteil mit Innenverzahnung in axialer Richtung,
- Fig. 2: einen Axialschnitt des Bauteiles gemäß Fig. 1,
- Fig. 3: eine Einzelheit X aus Fig. 2,
- Fig. 4: eine Einzelheit Y aus Fig. 1 und
- Fig. 5: eine 3D-Darstellung einer Innenverzahnung mit Abweisflächen auf der Stirnfläche der Innenverzahnung.

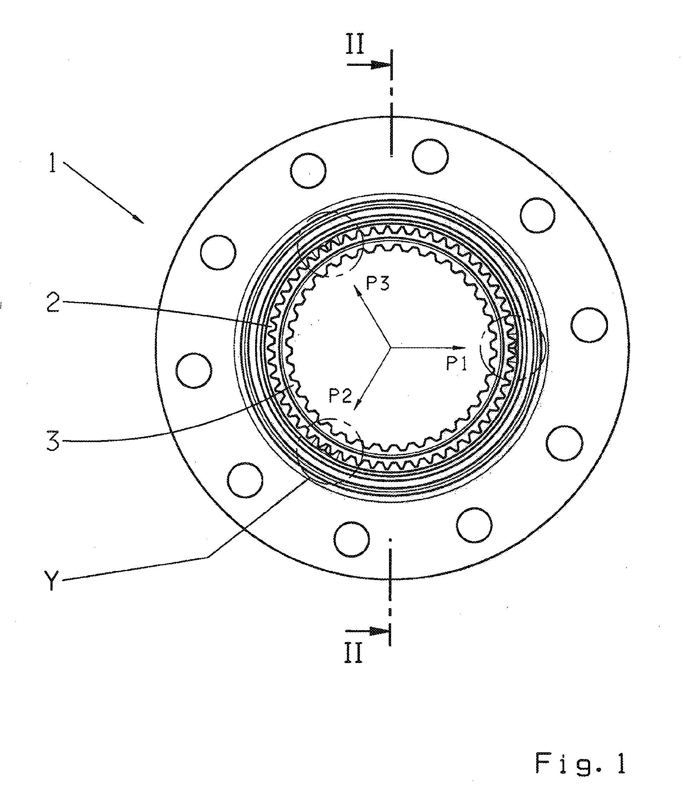

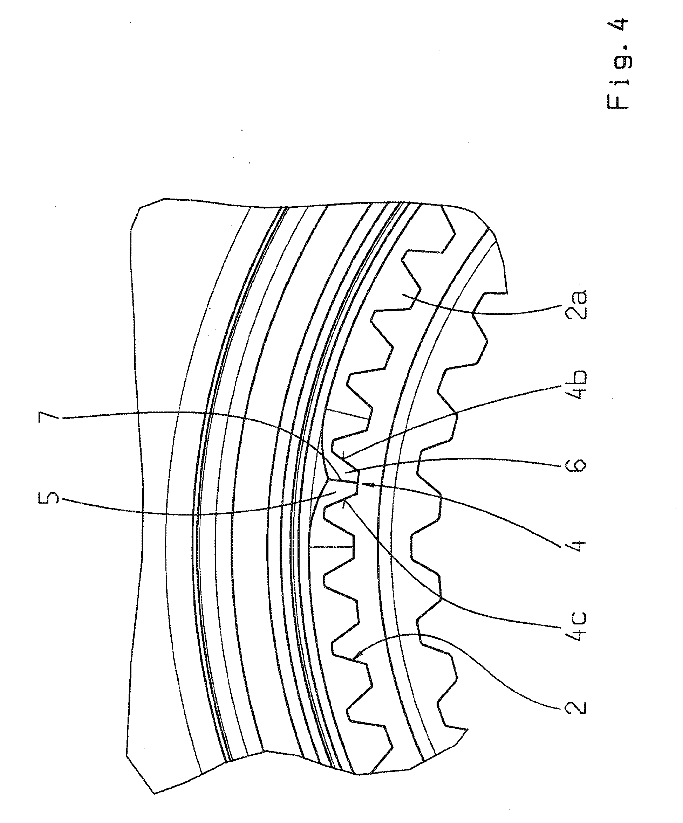

Fig. 1 zeigt eine Ansicht in axialer Richtung auf ein Bauteil 1, welches eine Innenverzahnung 2 mit größerem Innendurchmesser und eine Innenverzahnung 3 mit kleinerem Innendurchmesser aufweist. Durch Pfeile P1, P2, P3 werden drei eingekreiste Umfangspositionen angezeigt, von denen eine als Einzelheit Y in Fig. 4 dargestellt ist.

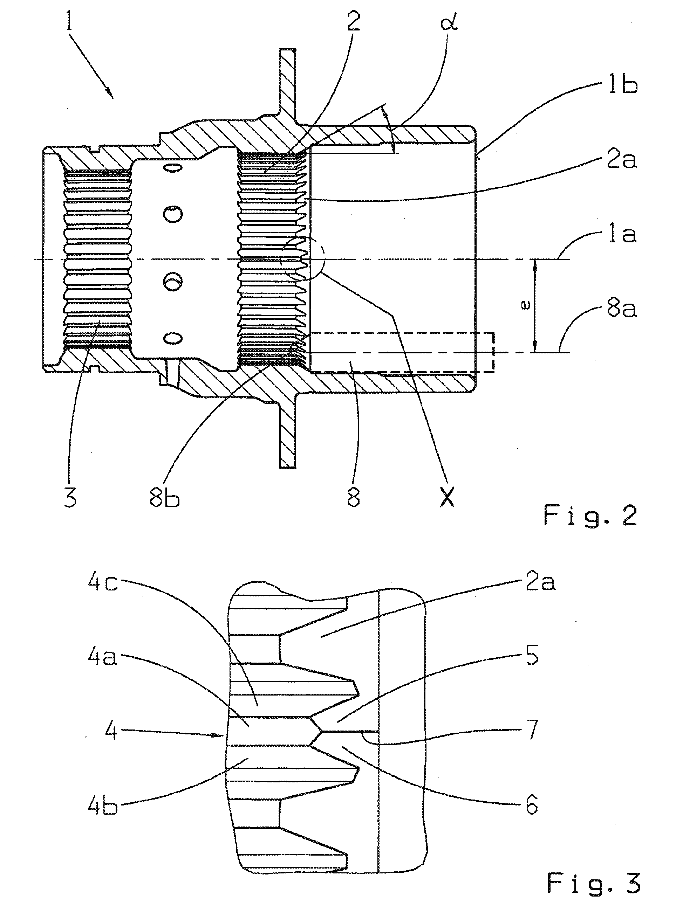

Fig. 2 zeigt einen Schnitt in der Ebene II-II in Fig. 1 durch das Bauteil 1, d. h. einen Axialschnitt. Das hohlzylindrisch ausgebildete Bauteil 1 weist eine Längsachse 1a sowie eine Stirnseite 1 b auf. Die Innenverzahnung 2 weist eine konisch ausgebildete Stirnfläche 2a auf, welche gegenüber der Stirnseite 1 b des Bauteiles 1 in axialer Richtung nach innen versetzt ist. Das Bauteil 1 soll - was nicht dargestellt ist - mit einem weiteren Bauteil, welches den Innenverzahnungen 2, 3 entsprechende Außenverzahnungen aufweist, gefügt werden, um einen Formschluss zwischen beiden Bauteilen herzustellen. Beispielsweise können die zu fügenden Bauteile in einem Kraftfahrzeug-Automatgetriebe Verwendung finden. Um die Montage der beiden Bauteile, d. h. das axiale Fügen zu erleichtern, sind an der Stirnfläche 2a der Innenverzahnung 2 Abweiselemente vorgesehen, die als Einzelheit X in Fig. 3 dargestellt sind.

Fig. 3 zeigt einen vergrößerten Ausschnitt der Innenverzahnung 2, deren Stirnfläche 2a und einen in Axialrichtung verlaufenden Zahn 4 mit einem Zahnkopf 4a sowie mit seitlich angeordneten Zahnflanken 4b, 4c. Die Stirnfläche des Zahnes 4 wird durch zwei dachartig zueinander verlaufende Abweisflächen 5, 6 gebildet, welche sich in einer geraden Abweiskante 7, dem "Dachfirst", schneiden. Die Herstellung der Abweisflächen 5, 6 wird anhand der Fig. 2 erläutert.

In das Bauteil 1 ist von seiner Stirnseite 1 b her ein Werkzeug 8 mit einer Rotationsachse 8a eingeführt, welche parallel zur Längsachse 1 a des Bauteiles 1 verläuft. Das Werkzeug 8 ist als Kegelfräser ausgebildet, d. h. es weist einen kegelförmig ausgebildeten Fräskopf 8b auf. Die Herstellung der erfindungsgemäßen Abweisflächen 5, 6 mit Abweiskante 7 erfolgt erfindungsgemäß mit dem Kegelfräser 8, was im Folgenden beschrieben wird:

Der um seine Achse 8a rotierende Kegelfräser 8 wird zunächst in axialer Richtung exzentrisch, d. h. mit dem Radius e zugestellt und anschließend auf einer Kreisbahn mit dem Radius e über einen bestimmten Umfangswinkel geführt. Auf diesem Weg stellt der Kegelfräser 8 mit seinem rotierenden kegelförmigen Fräskopf 8b eine konische Stirnfläche 2a her, deren Konizitätswinkel α in der Zeichnung (Fig. 2) angedeutet ist. Bei Erreichen einer ersten Umfangsposition, die in Fig. 2 als Einzelheit X eingekreist ist, wird der Kegelfräser 8 auf seiner Kreisbahn angehalten und in axialer Richtung zurückgestellt, d. h. aus dem Bauteil 1 (in der Zeichnung nach rechts) herausgefahren. Anschließend wird der Kegelfräser 8 von der entgegengesetzten Seite auf die erste Umfangsposition hinzubewegt, und zwar so weit, dass die beiden erzeugten Bearbeitungsflächen eine Verschneidungslinie 7 ergeben, die in Fig. 3 dargestellt ist. Durch das Anhalten des Kegelfräsers 8 bei seiner jeweiligen Annäherung in entgegengesetzten Richtungen an die erste Umfangsposition ergeben sich die Abweisflächen 5, 6, welche Teilflächen des Kegelmantels des Fräskopfes 8b sind. Die Abweiskante 7 ist also die Verschneidungslinie zweier parallel zueinander angeordneter Kegel. Das Werkzeug 8 wird bei dem beschriebenen Verfahren derart geführt, dass die Verschneidungslinie oder Abweiskante 7 mittig zu einem Zahn, in Fig. 3 als Zahn 4 dargestellt, angeordnet ist.

Die in Fig. 1 durch Pfeile P1, P2, P3 gekennzeichneten drei Umfangspositionen entsprechen jeweils der Darstellung in Fig. 3. Insgesamt weist die Stirnfläche 2a der Innenverzahnung 2 somit drei um ca. 120 Grad Umfangswinkel versetzte Zähne mit Abweisflächen 5, 6 und Abweiskante 7 auf. Damit wird eine vereinfachte Montage ermöglicht, wenn das nicht dargestellte Gegenstück mit einer entsprechenden Außenverzahnung axial gefügt wird. Bei der zu fügenden Außenverzahnung sind die Stirnseiten der Zähne - was nicht dargestellt ist - angeschrägt, d. h. mit dachartig ausgebildeten Abweisflächen versehen. Die Herstellung der Abweisflächen an der Außenverzahnung kann entsprechend den aus dem Stand der Technik bekannten Verfahren vorgenommen werden, z. B. gemäß der eingangs erwähnten DE 37 21 949 A1.

Die in Fig. 1 mit dem Pfeil P1 gekennzeichnete Umfangsposition ist als Einzelheit Y in Fig. 4 dargestellt. Fig. 4 zeigt also eine Ansicht in axialer Richtung auf die Stirnfläche 2a der Innenverzahnung 2 mit dem Zahn 4, dessen Stirnfläche die erfindungsgemäße Abweiskante 7 mit beidseitig angeordneten Abweisflächen 5, 6 aufweist. Wie bereits erwähnt, sind die Abweisflächen 5, 6 Teilflächen des Kegelmantels des Fräskopfes 8b und somit konkav ausgebildet.

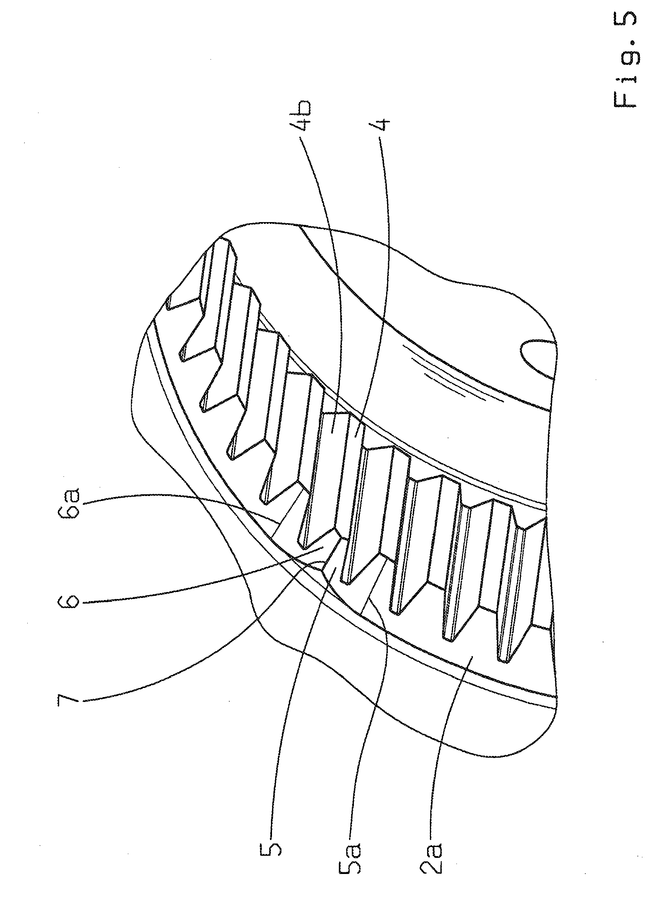

Fig. 5 zeigt eine 3D-Darstellung der Innenverzahnung 2 mit erfindungsgemäßen Abweisflächen 5, 6 für den Zahn 4; es werden wiederum die gleichen Bezugszahlen wie in den Figuren 3 und 4 verwendet. Die konkav ausgebildeten Abweisflächen 5, 6 werden gegenüber der konischen Stirnfläche 2a durch Kanten 5a, 6a abgegrenzt. Die Kanten 5a, 6a bezeichnen somit auch die Position des Kegelfräsers 8 (Fig. 2), in welcher die Bewegung auf der Kreisbahn mit dem Radius e angehalten wird und die Bewegung in axialer Richtung aus dem Bauteil heraus einsetzt.

### Bezugszeichen

- 1: Bauteil
- 1a: Längsachse
- 1b: Stirnseite
- 2: Innenverzahnung
- 2a: Stirnfläche
- 3: Innenverzahnung
- 4: Zahn
- 4a: Zahnkopf
- 4b: Zahnflanke
- 4c: Zahnflanke
- 5: Abweisfläche
- 6: Abweisfläche
- 7: Abweiskante (Verschneidungslinie)
- 8: Kegelfräser
- 8a: Rotationsachse
- 8b: Fräskopf

- α: Kegelwinkel
- e: Exzentrizität
- P1: erste Umfangsposition
- P2: zweite Umfangsposition
- P3: dritte Umfangsposition

## Patentansprüche

1. Verfahren zur Herstellung einer Innenverzahnung (2) mit Abweisflächen (5, 6), wobei die Innenverzahnung (2) in einem eine Stirnseite (1 b) aufweisenden Bauteil (1) angeordnet ist und eine Längsachse (1a) sowie eine Stirnfläche (2a), die gegenüber der Stirnseite (1 b) des Bauteils (1) in Richtung der Längsachse (1a) versetzt ist, aufweist, wobei die Stirnfläche (2a) der Innenverzahnung (2) mit einem kegelförmig ausgebildeten, um eine parallel zur Längsachse (1a) angeordnete Werkzeugachse (8a) rotierenden Werkzeug (8) spangebend bearbeitet wird, das rotierende Werkzeug (8) auf einer koaxial zur Längsachse (1a) angeordneten Kreisbahn geführt wird, das Werkzeug (8) zunächst achsparallel zugestellt wird, über einen bestimmten Umfangswinkel bis zum Erreichen einer ersten Umfangsposition (P1) auf der Kreisbahn geführt und anschließend achsparallel zugestellt wird, **dadurch gekennzeichnet, dass** das Werkzeug (8) nach achsparalleler Zustellung über einen bestimmten Umfangswinkel von der entgegengesetzten Richtung an die erste Umfangsposition (P1) herangeführt wird, so dass auf der Stirnfläche (2a) eine Verschneidungskante (7) der durch die Bearbeitung erzeugten Abweisflächen (5, 6) gebildet wird, welche mittig zu einem Zahnprofil (4, 4a, 4b, 4c) angeordnet ist.

2. Verfahren zur Herstellung einer Innenverzahnung (2) nach Anspruch 1, **dadurch gekennzeichnet, dass** die spangebende Bearbeitung durch Fräsen mit einem Kegelfräser (8, 8b) erfolgt.

3. Verfahren zur Herstellung einer Innenverzahnung (2) nach einem der Ansprüche 1 und 2, **dadurch gekennzeichnet, dass** die Innenverzahnung (2) vor oder nach der Bearbeitung mit einem Kegelfräser (8) herstellt wird.

4. Verfahren zur Herstellung einer Innenverzahnung (2) nach einem der Ansprüche 1 bis 3, **dadurch gekennzeichnet, dass** die Herstellung der Innenverzahnung (2) durch Räumen oder Stoßen erfolgt.

## Claims

1. Method for producing an internal toothing system (2) having deflection surfaces (5, 6), the internal toothing system (2) being arranged in a component (1) which has an end side (1b) and having a longitudinal axis (1a) and an end surface (2a) which is offset in the direction of the longitudinal axis (1a) with respect to the end side (1b) of the component (1), the end surface (2a) of the internal toothing system (2) being machined with the removal of material by way of a tool (8) which is of conical configuration and rotates about a tool axis (8a) which is arranged parallel to the longitudinal axis (1a), the rotating tool (8) being guided on a circular path which is arranged coaxially with respect to the longitudinal axis (1a), the tool (8) being advanced first of all in an axially parallel manner, being guided over a defined circumferential angle until a first circumferential position (P1) on the circular path is reached, and subsequently being advanced in an axially parallel manner, **characterized in that**, after axially parallel advancing, the tool (8) is guided over a defined circumferential angle from the opposite direction up to the first circumferential position (P1), with the result that an intersection edge (7) of the deflecting surfaces (5, 6) is formed on the end surface (2a), which intersection edge (7) is arranged centrally with respect to a tooth profile (4, 4a, 4b, 4c).

2. Method for producing an internal toothing system (2) according to Claim 1, **characterized in that** the machining with the removal of material takes place by milling by way of a conical milling tool (8, 8b).

3. Method for producing an internal toothing system (2) according to either of Claims 1 and 2, **characterized in that** the internal toothing system (2) is produced before or after the machining by way of a conical milling tool (8).

4. Method for producing an internal toothing system (2) according to one of Claims 1 to 3, **characterized in that** the production of the internal toothing system (2) takes place by broaching or gear shaping.

## Revendications

1. Procédé de fabrication d'une denture intérieure (2) avec des faces déflectrices (5, 6), la denture intérieure (2) étant disposée dans un composant (1) présentant un côté frontal (1b) et présentant un axe longitudinal (1a) ainsi qu'une face frontale (2a) qui est décalée dans la direction de l'axe longitudinal (1a) par rapport au côté frontal (1b) du composant (1), la face frontale (2a) de la denture intérieure (2) étant usinée par enlèvement de copeaux avec un outil (8) réalisé sous forme conique, tournant autour d'un axe d'outil (8a) disposé parallèlement à l'axe longitudinal (1a), l'outil rotatif (8) étant guidé le long d'une trajectoire circulaire disposée coaxialement par rapport à l'axe longitudinal (1a), l'outil (8) étant tout d'abord avancé avec son axe parallèle, étant guidé sur un certain angle circonférentiel jusqu'à atteindre une première position périphérique (P1) sur la trajectoire circulaire et étant ensuite avancé avec son axe parallèle, **caractérisé en ce que** l'outil (8), après son avance avec son axe parallèle, est approché de la première position périphérique (P1) suivant un certain angle circonférentiel depuis la direction opposée, de sorte qu'une arête de coupe (7) des faces déflectrice (5, 6) produites par usinage soit formée sur la face frontale (2a), laquelle est disposée centralement par rapport à un profil de dent (4, 4a, 4b, 4c).

2. Procédé de fabrication d'une denture intérieure (2) selon la revendication 1, **caractérisé en ce que** l'usinage par enlèvement de copeaux s'effectue par fraisage avec une fraise conique (8, 8b).

3. Procédé de fabrication d'une denture intérieure (2) selon l'une quelconque des revendications 1 et 2, **caractérisé en ce que** la denture intérieure (2) est fabriquée avant ou après l'usinage avec une fraise conique (8).

4. Procédé de fabrication d'une denture intérieure (2) selon l'une quelconque des revendications 1 à 3, **caractérisé en ce que** la fabrication de la denture intérieure (2) s'effectue par brochage ou mortaisage.
